# FASCICULE DE BREVET EUROPEEN

(11) **EP 2 379 912 B1**
(45) Date de publication et mention de la délivrance du brevet: **05.06.2013**
(21) Numéro de dépôt: 09799674.8
(22) Date de dépôt: 18.12.2009
(51) Int. Cl.: F16H 7/24

(54) **OUTIL DE MONTAGE D'UNE COURROIE SUR UNE POULIE.**
WERKZEUG ZUR BEFESTIGUNG EINES RIEMENS AUF EINER RIEMENSCHEIBE
TOOL FOR MOUNTING A BELT ON A PULLEY

(30) Priorité: 07.01.2009 FR 0900035
(43) Date de publication de la demande: 26.10.2011
(73) Titulaire: Hutchinson, 75008 Paris (FR)
(72) Inventeur: COIRAULT, Jean-Philippe, F-37000 Tours (FR); GUILLOT, Benoît, F-37270 Larcay (FR); VOULGARIS, Dimitri, F-37800 Nouatre (FR)
(74) Mandataire: Reboussin, Yohann Mickaël Noël
(86) Numéro de dépôt international: PCT/FR2009/001458
(87) Numéro de publication internationale: WO 2010/079267

(56) Documents cités:
- WO-A-2009/001574
- JP-A- 2002 021 955
- US-A- 4 193 310
- US-A1- 2003 176 248
- US-A1- 2008 155 803

## Description

La présente invention a pour objet un outil de montage d'une courroie sur une poulie qui équipe un système de transmission, par exemple une courroie d'accessoires automobiles, ou bien encore tout dispositif industriel requérant une transmission d'une puissance mécanique.

Cet outil de montage concerne plus particulièrement le montage de courroies impliquant une mise en tension lors du montage, par exemple dans le cas de courroies dites élastiques ou "snap-on" qui sont montées de la sorte et qui peuvent fonctionner sans tendeur fixe car elles sont de par leurs propriétés capables de maintenir une tension suffisante lors de leur fonctionnement, et ce pendant toute leur durée de vie nominale.

On connaît déjà différents types d'outils de montage, par exemple ceux qui sont dans les Demandes EP 831 247, FR 2 855 777 ou bien encore dans la Demande WO 02/36987.

Ces outils ont en commun d'être par principe externes à la poulie, car ils impliquent soit de guider la courroie au-dessus des rainures de la poulie et dans ce cas, l'outil déborde également de part et d'autre de la poulie (FR 2 855 777) soit sur le côté de celle-ci (EP 831 247 ou WO 02/36987) avec un débord latéral important. Dans le cas de la Demande EP 831 247, l'outil vient en appui sur le trottoir bordant de part et d'autre des rainures de la poulie et sur le flanc de la poulie et l'extraction s'effectue à l'aide d'un levier en maintenant la courroie à plat et en utilisant un guidage par effet de rampe. Dans le cas de la Demande WO 02/36987, la courroie repose à plat sur l'outil et est guidée latéralement par l'outil, ce qui implique dans ce cas également que la partie encore libre de courroie est espacée du flanc de la poulie en formant une hélice. Le document US 4193310 qui représente l'état de la technique le plus proche décrit un ensemble selon le préambule de la revendication 1.

La présente invention a pour objet un nouveau concept d'outil de montage qui puisse être ou non intégré à une poulie et qui facilite le montage tout en ayant un encombrement limité.

L'invention concerne ainsi un outil de montage d'une courroie sur une gorge rainurée d'une poulie d'un système de transmission, caractérisé en ce qu'il comporte une région de nez présentant un bord d'accrochage formant lors du montage un appui pour au moins une partie de la denture de la courroie en surélevant un bord externe de la courroie par rapport à un bord interne opposé. Avantageusement, le bord d'accrochage est disposé radialement (α = 0) ou forme avec un rayon de la poulie passant par la base du bord d'accrochage un angle α pris dans un plan perpendiculaire à l'axe de la poulie, qui est inférieur ou égal à 60°, et est plus particulièrement compris entre 30° et 45°.

Lors du montage, la courroie est entraînée par la région de nez qui transmet les efforts à la courroie tout en la faisant basculer, du fait que son bord en contact avec la région de nez est relevé par rapport à son bord opposé, ce qui permet au bord tombant encore libre de la courroie d'échapper au plus près du flanc de la poulie.

Le bord d'accrochage de la région de nez peut présenter un sommet plan, en étant éventuellement pourvu de part et d'autre de bords convexes amont et aval, ou bien présenter un profil convexe.

De préférence, le bord d'accrochage ne s'étend pas au-delà d'un rebord de la gorge rainurée de la poulie.

Le bord d'accrochage de la région de nez peut avoir une longueur d'appui H au moins égale à la largeur de la région rainurée de la poulie ; cette largeur est sensiblement égale à la largeur de la courroie qui équipe la poulie.

Le bord d'accrochage de la région de nez se prolonge avantageusement à sa base par une région de dégagement profilée plongeante depuis ledit bord de la gorge rainurée de la poulie.

Dans ce cas, le bord d'accrochage de la région de nez et la région de dégagement ont avantageusement une longueur utile H' au moins égale à la largeur L de la gorge rainurée de la poulie.

La région de dégagement profilée présente avantageusement une région sensiblement plane ou convexe formant avec un rayon de la poulie passant par le pied de la région de nez un angle β₁, notamment compris entre 30° et 60° dans un premier plan comprenant ledit rayon et l'axe de la poulie.

La région de dégagement peut présenter au moins un bord convexe, amont et/ou aval.

La région de nez et la région de dégagement profilée présentent de préférence une région de raccordement sensiblement plane, concave ou convexe.

L'outil présente avantageusement, en amont du bord d'accrochage, un muret de guidage longeant une partie du bord de la gorge rainurée de la poulie. La région de nez peut comporter ledit muret de guidage.

Le bord d'accrochage présente avantageusement à une extrémité libre une butée latérale pour venir en contact avec un bord externe de la courroie en cours de montage de manière à empêcher son glissement.

L'outil peut être distinct de la poulie et il comporte alors une face latérale d'appui sur une joue latérale de la poulie. Il peut comporter également une région présentant une face inférieure d'appui sur la gorge de la poulie et une face supérieure d'appui de la courroie au moins au niveau du bord d'accrochage et éventuellement en amont et/ou en aval de celui-ci. La face inférieure d'appui présente de préférence un profil complémentaire de la gorge rainurée de ladite poulie.

De préférence, l'outil est intégré à ladite poulie.

L'outil peut être alors caractérisé en ce qu'il est intégré à une poulie qui présente une région latérale de plus petite surface que ledit bord latéral de la poulie et qui s'inscrit dans son contour et en ce que cette région latérale présente un bord externe relevé, ce qui permet de recevoir un bord tombant de la courroie en aval de la région de nez.

L'outil peut être caractérisé en ce qu'il est intégré à ladite poulie et en ce que la poulie présente une région latérale déportée, notamment cylindrique, dont la surface est plus petite que celle dudit bord latéral de la poulie et qui s'inscrit dans son contour, et en ce qu'il comporte un premier élément formant un dit muret de guidage longeant une partie dudit bord de la gorge rainurée de la poulie et un deuxième élément formant une dite région de dégagement profilée, au moins le deuxième élément étant porté par ladite région latérale déportée et étant bordé par une zone de guidage latéral.

Dans ce cas, il peut être caractérisé en ce que la région de dégagement présente une première région amont, plane ou convexe qui est située radialement sensiblement au niveau de la région rainurée de la poulie et une deuxième région intermédiaire raccordant la région amont à la région latérale déportée.

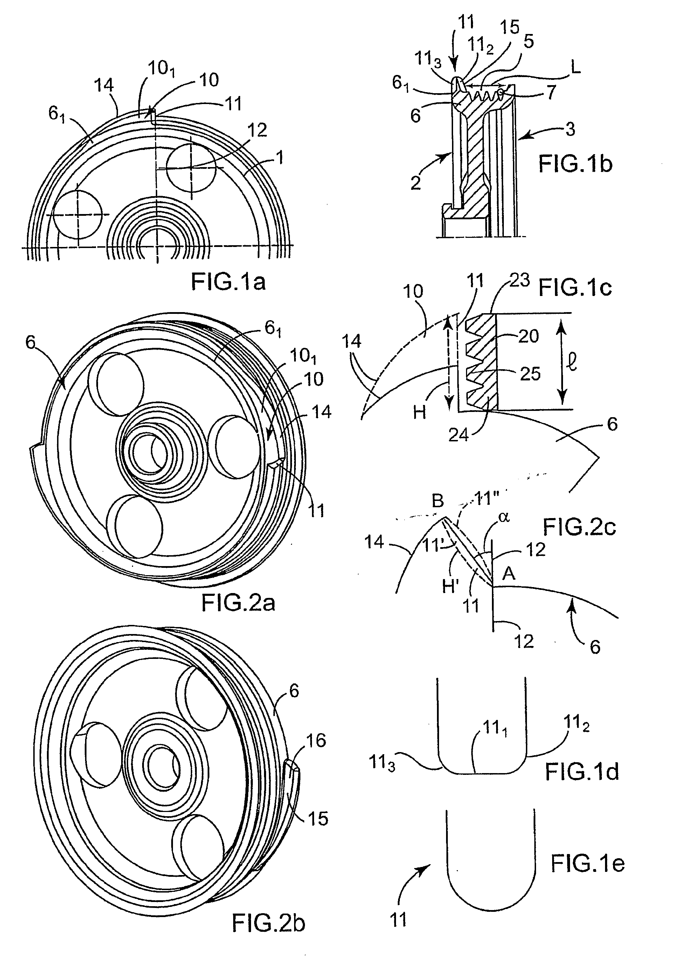

L'invention sera mieux comprise à la lecture de la description ci-après, en liaison avec les dessins annexés dans lesquels :
- les figures la et 1b représentent en vue partielle de face et de profil un mode de réalisation d'un outil intégré à une poulie et qui présente une région de nez, 1a figure 1c montrant en coupe le positionnement d'une courroie lors du montage, et les figures 1d et le deux coupes médianes illustrant deux formes des bords d'accrochage.
- les figures 2a et 2b sont deux vues en perspective d'un autre mode de réalisation d'un outil intégré présentant une région de nez, et la figure 2c illustre la définition de l'angle α,
- la figure 3 illustre un montage d'une courroie selon l'invention sur une transmission simplifiée comportant deux poulies,
- les figures 4a et 4b sont deux vues en perspective d'un mode de réalisation de l'invention associant une région de nez et une région de dégagement, dont trois variantes sont illustrées en perspective aux figures 5a et 5b ; 6a et 6b; et 7a et 7b, alors que la figure 4c illustre la définition de l'angle β₁, et les figures 6c, 7c et 8c illustrent la définition de la hauteur H' respectivement pour les figures 6a et 6b, 7a et 7b et 8a et 8b,
- les figures 8a et 8b d'une part et 9a et 9b d'autre part montrent en perspective et en vue de profil deux variantes de l'invention adaptées à une poulie présentant une région déportée de surface inférieure à celle de la joue de la poulie,
- la figure 10 illustre une variante de l'invention dans laquelle le bord d'accrochage de la région de nez présente une butée latérale anti-glissement.
- et les figures 11a à 11c représentent en perspective une variante préférée d'outil séparé adapté à être monté sur la poulie (Figure 11a), les figures 11b et 11c étant deux représentations en perspective de l'outil installé sur une poulie, et la figure 12 en est une variante simplifiée.

La figure la montre une poulie 1 présentant deux joues ou flancs 2 et 3, un axe central 4 et une gorge rainurée 5 de la largeur L de manière à recevoir des rainures d'une courroie par exemple une courroie de transmission automobile (type K).

Cette gorge rainurée 5 est bordée de deux rebords 6 et 7 dont l'un, référencé 6, présente une région de nez 10 présentant un bord d'accrochage 11 disposé pour former une zone d'accrochage radiale (figures la et 1d) qui présente une région de sommet 11₁ située dans un plan contenant le rayon 12 et l'axe de la poulie 1 et qui est bordée de deux régions amont 11₂ et aval 11₃ de forme arrondie, ou bien qui présente un profil convexe orienté radialement (figure le), c'est-à-dire selon une surface dont les génératrices sont parallèles au rayon 12 et qui passe par le sommet de la zone d'accrochage 11 (figure 1a) ou bien qui présente des génératrices concaves ou convexes. A la figure 1b, on voit que le bord d'accrochage 11 ne s'étend pas au-delà du rebord 6. Dans l'exemple, sa face externe 10₁ se termine à l'aplomb de la face externe 6₁ de ce rebord 6.

On notera que d'une manière générale, il convient d'éviter que la denture 25 et les bords 23, 24 de la courroie 20 ne rencontrent sur leur trajet des arêtes vives, et donc qu'il est souhaitable d'arrondir les contours.

Le bord d'accrochage 11 présente une hauteur H (figure 1c) qui est de préférence égale à la largeur L de la gorge rainurée 5 (laquelle est sensiblement égale à la largeur 1 de la courroie), ce qui lui permet de présenter une longueur d'appui utile suffisante (tracé de 14 en pointillés) pour recevoir les dents 25 de la courroie 20 en surélevant le bord externe 23 par rapport au bord interne 24.

En pratique, le bord d'accrochage 11, de par sa localisation, empêche que la courroie 20 ne soit déportée latéralement.

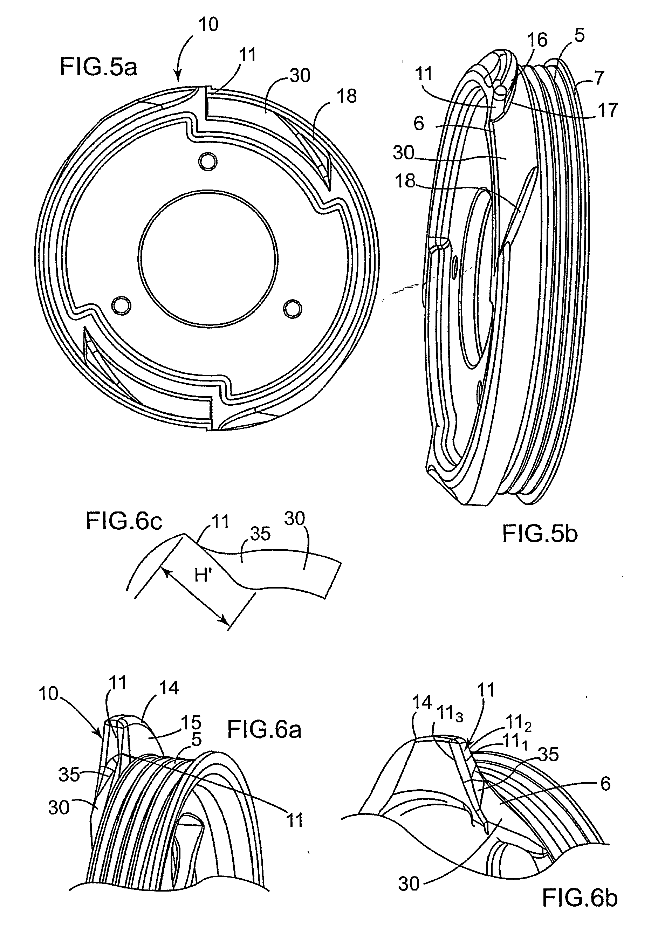

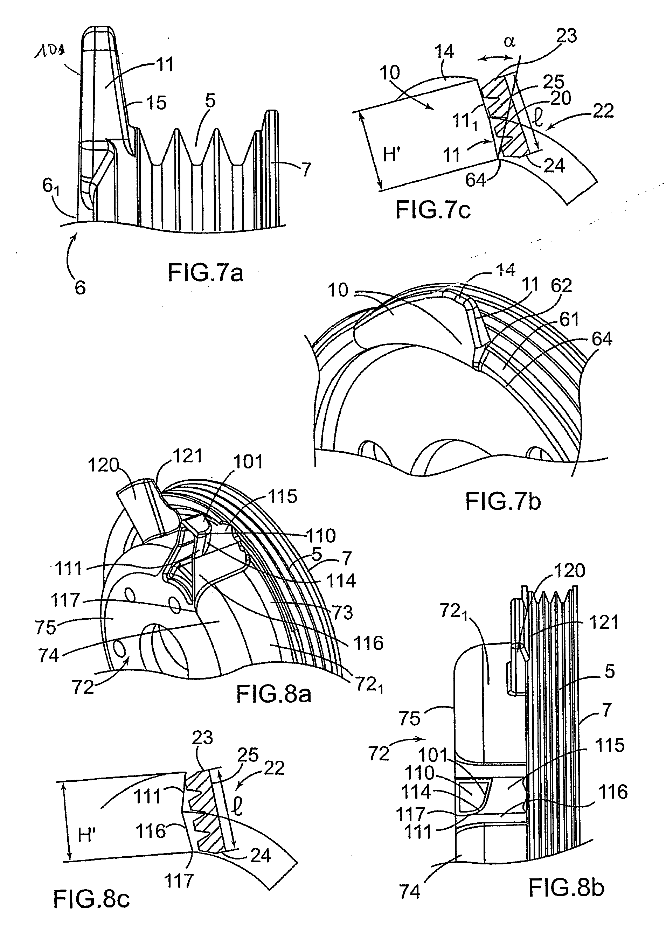

Il est cependant avantageux qu'en amont du bord d'accrochage 11, la région de nez 10 présente en amont du bord d'accrochage 11, un bord plan 15 droit ou incliné (voir également les figures 6a et 7a) qui longe le rebord 6 pour former lors du montage de la courroie 20, un muret de guidage latéral pour la courroie 20 qui chausse la gorge 5.

La face supérieure de la région de nez 10 peut présenter vers l'arrière par un profil progressif 14 qui rejoint le rebord 6. Ce profil progressif permet d'assurer une solidité mécanique optimale tout en évitant de grever le poids de la région de nez 10 et donc le balourd qu'il génère.

Les figures 2a et 2b illustrent une variante selon laquelle la zone d'accrochage 11 n'est plus radiale, mais inclinée par rapport au rayon 12 d'un angle α dans un plan contenant le rayon 12 (qui dans ce cas passe par la base du bord d'accrochage 11) et qui est perpendiculaire à l'axe de la poulie. Cet angle α dont la valeur spécifiée est en général <80° notamment <60° et de préférence compris entre 30° et 45°, de même que la hauteur utile H' sont illustrés à la figure 2c. De préférence, H' ≥ L. Pour une forme concave ou convexe (génératrices 11' ou 11" en pointillés) l'angle α est défini entre les points extrêmes A et B à la base et au sommet du bord d'accrochage 11. On notera qu'une forme concave ou convexe telle que représentée est favorable du point de vue du glissement de la courroie vers l'extérieur le long du bord 11 sous l'effet de la tension. Le bord plan 15 peut déboucher sur le bord d'accrochage 11 par une région 16 (figure 2b) dirigée vers l'extérieur et qui permet un guidage optimal de la courroie.

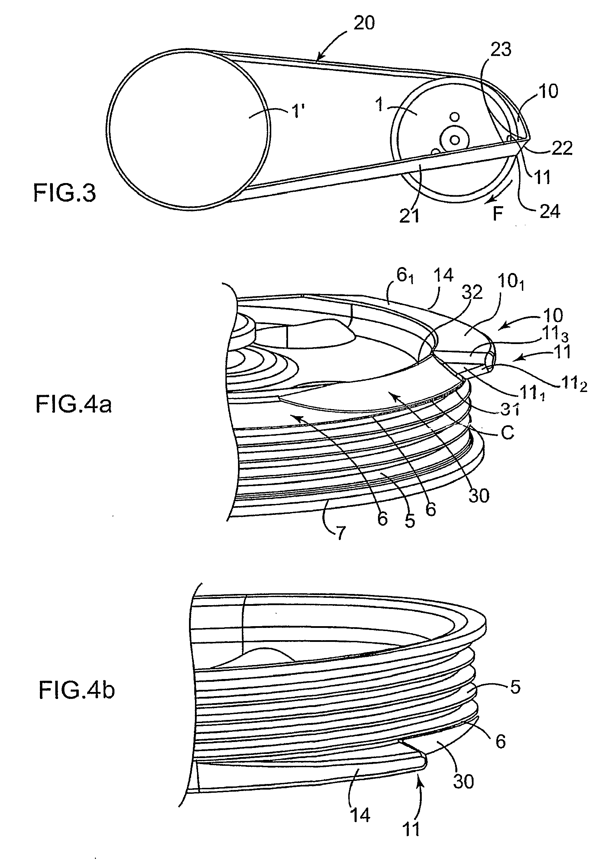

La figure 3 illustre le montage d'une courroie 20 sur un système de transmission qui à titre d'exemple simplifié, comporte deux poulies 1 et 1'. La courroie est chaussée sur la poulie 1' et est pré-positionnée sur la gorge rainurée 5 et sur le bord d'accrochage 11 de manière à présenter en aval (dans le sens de la pose) un bord tombant 21 qui plonge en longeant la joue 2 de la poulie 1.

En faisant tourner la poulie 1 dans le sens de la flèche F, la courroie 20 chausse progressivement la gorge 5 de la poulie car la courroie 20, dont le bord externe 23 est surélevé par rapport au bord interne 24, est poussée par le bord d'accrochage 11 qui dans la zone 22 de la courroie 20 est en contact avec au moins une partie de la denture 25. En poursuivant le mouvement de rotation de la poulie 1 dans le sens de la flèche F, la courroie 20 chausse la gorge 5 de la poulie 1 en même temps qu'elle est mise progressivement en tension.

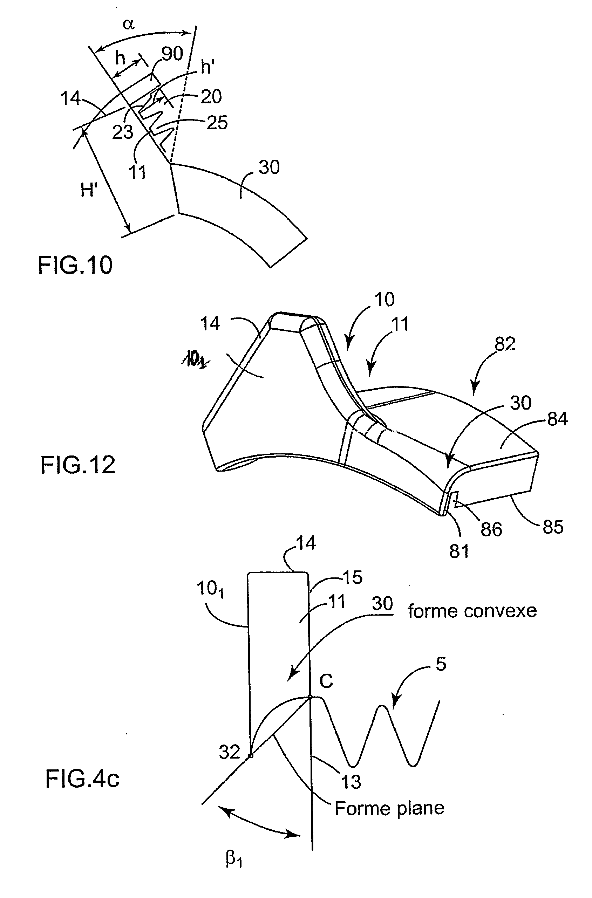

Pour faciliter le positionnement du bord tombant 21 qui est obtenu grâce au vrillage de la courroie autour du bord d'accrochage 11, il est avantageux de prévoir (voir figure 4a et 4b), en aval du bord d'accrochage 11 de la région de nez 10, une région de dégagement profilée 30 plongeante depuis le bord relevé 6 de la gorge 5. Cette région de dégagement 30 peut être plane comme représenté aux figures 4a et 4b, en formant avec un rayon 13 passant par le centre C de son contour curviligne amont 31 (le repère 32 désigne son contour curviligne aval) et compris par exemple entre 30° et 60°. Un angle β₁ égal à 90° correspond à une forme non inclinée alors qu'un angle nul correspond à une forme verticale dégagée. Cet angle β₁ est pris dans un plan qui comprend le rayon 13 et l'axe de la poulie 1 et est compté positivement vers l'extérieur (figure 4c). Pour une région de dégagement 30 plane, l'angle est pris entre le segment (32, C) et le rayon 13.

La région de dégagement 30 peut être convexe et dans ce cas, β₁ est déterminé comme illustré à la figure 4c, également comme l'angle entre le rayon 13 et le segment (32, C).

La région de dégagement 30 peut présenter un bord amont 31 et/un bord aval 32 convexe.

La présence de la région 30 permet comme il sera montré ci-après d'allonger la région d'appui utile de la denture de la courroie 20 dans la région 22 (ce qui permet de diminuer la hauteur de la région de nez 10) et la longueur de contact utile H' peut être avantageusement choisie supérieure ou égale à la largeur de la gorge 5. On notera que dans cet exemple (figure 4a) α = 0°, mais qu'il peut être mis en oeuvre avec toute autre valeur spécifiée de l'angle α.

Les figures 5a et 5b illustrent le cas où la région de nez 10 présente en amont du bord d'accrochage 11 un contour convexe 16 dirigé vers l'extérieur et bordant en 17 la région de dégagement 30 de manière à améliorer le guidage du bord tombant 21 de la courroie 20 autour du bord d'accrochage 11, ici de forme arrondie. Il peut être également prévu à une distance suffisante du bord d'accrochage 11 un muret de guidage 18 incliné vers l'extérieur de manière à accompagner le déplacement de la courroie 20. On notera que dans cet exemple α = 0°, mais qu'il peut être mis en oeuvre avec toute autre valeur spécifiée de l'angle α.

Comme la rotation de la poulie 1 dans le sens de la flèche F plaque la zone 22 de la courroie sur le bord d'accrochage 11, le muret de guidage 18 n'a en pratique qu'une fonction supplétive.

Dans la variante préférée des figures 6a et 6b, il existe une région de transition 35 plane, concave ou convexe entre le bord d'accrochage 11 et la région de dégagement profilée 30, ce qui permet un guidage progressif de la courroie. Dans cette variante, le bord d'accrochage 11 est incliné d'un angle α non nul et inférieur à 60° et qui est de préférence compris entre 30° et 45°. La longueur utile H' (de préférence H' L) est illustrée à la figure 6c. On y voit qu'elle englobe la région de sommet 11, et la région de transition 35.

Les figures 7a et 7b illustrent une autre variante dans laquelle la poulie 1 présente un bord tombant tronconique 61 qui se raccorde avec le bord d'accrochage 11 par une zone de raccordement concave 63 (0 ≤ a < 60° et α de préférence compris entre 30° et 45°). La longueur utile H' englobe le sommet 11₁ du bord d'accrochage 11, et la zone de raccordement 63 jusqu'à l'extrémité 64 du bord tronconique 61 (voir figure 7c) et cette longueur utile H' est de préférence supérieure ou égale à la largeur 1 de la courroie 20.

Les figures 8a et 8b montrent le cas d'un outil intégré à une poulie présentant une région déportée 72 dont la surface est inférieure à celle du bord latéral de la poulie, et notamment de diamètre intermédiaire inférieur au diamètre de la gorge 5 de la poulie 1.

La région de nez 110 est un élément séparé qui présente un profil en forme de J avec une région amont 101 sensiblement plane qui guide la courroie 20 vers l'extérieur en aval du bord interne 121 d'un muret de guidage 120 jouxtant et surplombant la gorge 5 de la poulie 1.

Lors du montage, le bord externe 23 de la courroie 20 longe le bord interne 121 et la région 101 située dans son prolongement, et tourne en aval dans la région en arc de cercle 114 pour atteindre le bord d'accrochage 111. La courroie 20 est en appui sur la région plane ou convexe 115 qui jouxte la région amont 101, et qui est située radialement sensiblement au niveau de la gorge rainurée 5. Elle est ensuite guidée par la région intermédiaire plane ou convexe 116 et glisse le long de l'arrondi 74 qui présente éventuellement la région cylindrique 72₁ qui est située entre le trottoir 73 et la flanc 75 de la région intermédiaire 72.

La région en arc de cercle 114 qui relie la région 101 et la zone d'accrochage 111 permet d'accompagner la rotation de la courroie 20 au cours du montage qui s'effectue comme indiqué à la figure 3.

La longueur utile H' à prendre en compte (et qui est de préférence au moins égale à 1) englobe le bord d'accrochage 111 et la région 116 jusqu'au pied 117 de celle-ci. Ceci permet de diminuer la hauteur effective de la région de nez 110. Dans l'exemple représenté, α = 0, mais cet angle peut présenter une valeur non nulle inférieure à 60° et de préférence entre 30° et 45°.

Dans le mode de réalisation représenté, il y a deux éléments distincts 110 et 120 dans le prolongement l'un de l'autre, mais ceux-ci pourraient être réunis pour ne former qu'un seul élément, mais cette solution augmenterait le poids et la balourd sans présenter d'intérêt fonctionnel particulier.

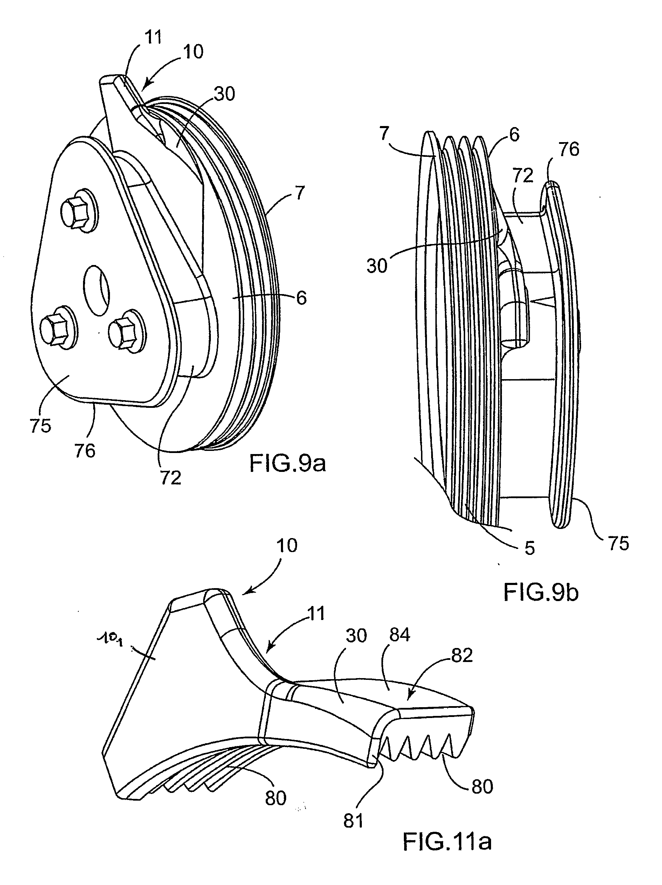

Les figures 9a et 9b montrent un autre mode de réalisation pour une poulie présentant une région déportée.

L'outil présente une région de nez 10 et éventuellement une région de dégagement 30 comme décrit aux figures 1a, 1b ; 2a, 2b ; 4a, 4b ; 5a, 5b ; 6a, 6b ; ou 7a, 7b et la région déportée 72 présente un muret 76 qui prolonge le flanc 75 et qui permet de maintenir la courroie sur le contour de la région 72 contre la joue principale 6 de la poulie.

On notera que la région déportée 72 peut être comme représenté en forme de triangle alternant des régions droites et des arrondies, ou bien tout autre contour tel que cylindrique comme aux figures 8a et 8b.

Les outils décrits ci-dessus sont intégrés à une poulie. De par leur conception, ils introduisent une masse excentrée et donc un balourd. Certaines variantes permettent de diminuer la hauteur de la région de nez et diminuent le balourd. Ce balourd peut être compensé par des masselottes et/ou en ménageant des ouvertures localisées, ou bien encore en disposant deux outils de manière symétrique comme aux figures 2a et 2b ; et 5a et 5b.

Il est particulièrement avantageux d'intégrer un tel outil à une poulie en matériau thermodurcissable, dont le poids est très nettement inférieur à celui d'une poulie métallique. Dans ce cas, le balourd dû à l'outil peut être dans le plupart des cas considéré comme négligeable, et donc il peut n'être pas compensé.

La valeur de l'angle α est limitée par le glissement de la courroie vers l'extérieur le long du bord 11 sous l'effet de la tension. Le glissement est d'autant plus fort que la tension de montage de la courroie est plus élevée. Il est donc beaucoup plus important dans le cas par exemple d'une courroie automobile (type K) que pour une courroie pour électroménager (lave-linge). On peut augmenter la valeur de l'angle α en disposant (voir figure 10) à l'extrémité supérieure du bord d'accrochage 11 une butée 90 de hauteur h (par exemple h = h₀, h₀ étant la hauteur de la courroie 20), qui maintient le bord externe 23 de la courroie 20.

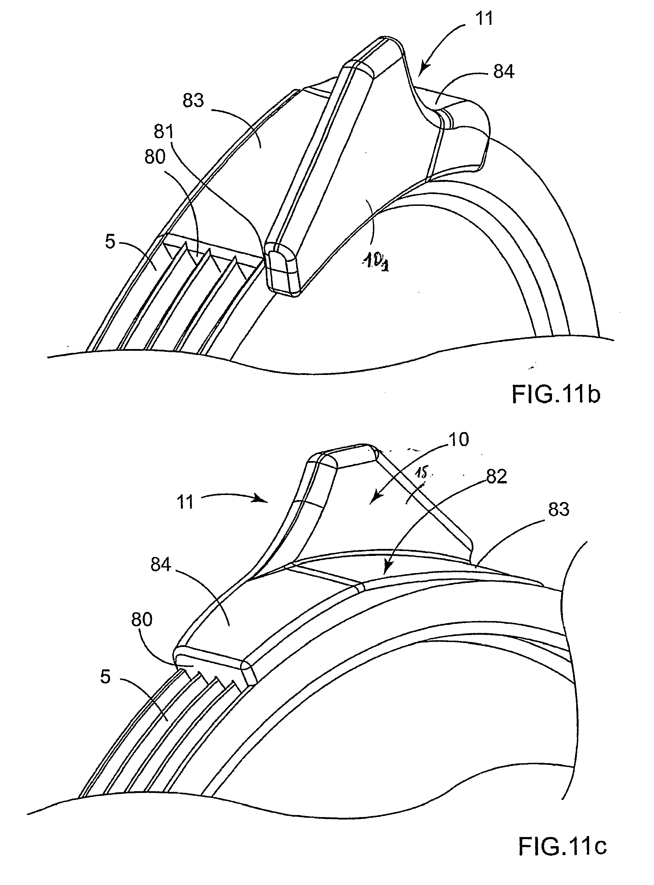

Les figures 11a à 11c concernent un outil par exemple en matériau plastique ou en métal qui peut être indépendant de la poulie. Cet outil peut comporter une région de nez 10 et éventuellement une région de dégagement 30 comme décrit en relation avec les figures 1a, 1b ; 2a, 2b ; 4a, 4b ; 5a, 5b ; 6a, 6b ; ou 7a, 7b. Son montage sur la gorge 5 de la poulie 1 est réalisé grâce à un profil rainuré 80 qui est le négatif des profils de la gorge 5 et un bord 81 qui vient en appui sur la joue 6 de la poulie 1, de préférence sur le bord qui porte la région de nez 10. Le bord 81 permet d'éviter le basculement de l'outil lors du montage.

Lors du montage, la courroie qui est progressivement en tension appuie sur la face supérieure 82 qui reçoit la denture de la courroie, ce qui maintient l'outil en place. Le montage se fait comme à la figure 3, et l'outil peut être ensuite dégagé.

La face supérieure 82 d'appui de la courroie présente avantageusement un profil s'étendant depuis un bord amont 83 longeant la région de nez 10 et ce profil est disposé moins en vis-à-vis du bord d'accrochage 11 et un bord 84 qui s'étend au-delà du pied du bord d'accrochage 11 et d'une longueur suffisante pour servir d'appui à la courroie 20 lors de son mouvement de village autour du bord d'accrochage 11.

Le profil de la face supérieure 82 est avantageusement progressif depuis le bord amont 83 situé pratiquement au niveau des nervures de la gorge 5 de la poulie 1, et le bord aval 84 qui est surélevé pour assurer une épaisseur suffisante pour la tenue mécanique de l'outil aux efforts de montage.

La figure 12 est une variante simplifiée des figures 11a à 11c qui s'en distingue par l'absence du profil rainuré 80 qui est remplacé par une face d'appui concave 85 qui vient en appui sur la gorge rainurée 5 de la poulie. La face d'appui concave 85 est bordée par une rainure 86 pour définir le bord 81 qui vient en appui sur la joue 6 de la poulie 1. Le bord 81 et la rainure 86 permettent d'éviter le basculement de l'outil lors du montage.

## Revendications

1. Ensemble comportant une poulie (1), munie d'une gorge rainurée (5), d'un système de transmission et un outil de montage d'une courroie (20) sur cette gorge, (5), l'outil comportant une région de nez (10) présentant une face externe (10₁), un bord interne (15) et une région d'extrémité constituant un bord d'accrochage (11, 111) formant lors du montage un appui pour au moins une partie de la denture (25) de la courroie (20) de sorte que ledit appui s'effectue en surélevant un bord externe (23) de la courroie (20) par rapport à son bord interne opposé (24), ledit bord d'accrochage (11, 111) étant par ailleurs disposé radialement ou formant avec un rayon (12) de la poulie (1) passant par la base (A) du bord d'accrochage (11, 111) un angle (α) pris dans un plan perpendiculaire à l'axe (4) de la poulie (1), qui est inférieur à 80° **caractérisé en ce que** le bord d'accrochage (11, 111) de la région de nez (10) se prolonge à sa base par une région de dégagement profilée (30, 116) plongeante depuis le bord (6) de la gorge rainurée (5) de la poulie (1).

2. Ensemble selon la revendication 1, **caractérisé en ce que** la face externe (10₁) de la région de nez (10) est à l'aplomb de la face externe (6₁) du bord (6) de la gorge rainurée (5) de la poulie (1).

3. Ensemble selon une des revendications 1 ou 2, **caractérisé en ce que** le bord d'accrochage (11, 111) de la région de nez (10) présente un sommet plat (11₁).

4. Ensemble selon la revendication 3, **caractérisé en ce que** la région de du sommet (11₁) du bord d'accrochage (11, 111) présente de part et d'autre des bords convexes (11₂, 11₃).

5. Ensemble selon une des revendications 1 ou 2, **caractérisé en ce que** le bord d'accrochage (11) est convexe.

6. Ensemble selon la revendication 1, **caractérisé en ce que** le bord d'accrochage (11, 111) de la région de nez (10) et la région de dégagement profilée (30) ont une longueur utile (H') au moins égale à la largeur de la gorge rainurée (5) de la poulie (1).

7. Ensemble selon une des revendications précédentes , **caractérisé en ce que** la région de dégagement profilée (30) présente une région sensiblement plane ou convexe formant avec un rayon de la poulie (1) un angle (β₁) notamment compris entre 30° - et 60° dans un premier plan comprenant ledit rayon et l'axe de la poulie (1).

8. Ensemble selon une des revendications précédentes, **caractérisé en ce que** la région de dégagement profilée (30) présente au moins un bord convexe amont (31) et/ou aval (32).

9. Ensemble selon une des revendications précédentes, **caractérisé en ce que** la région de nez (10) et la région de dégagement profilée (30) présentent une région de raccordement (35) sensiblement plane, concave ou convexe.

10. Ensemble selon une des revendications précédentes, **caractérisé en ce qu'**il présente en amont du bord d'accrochage (11), un muret de guidage (15, 16, 120) droit ou incliné et longeant une partie dudit bord (6) de la gorge rainurée (5) de la poulie (1).

11. Ensemble selon la revendication 10, **caractérisé en ce que** la région de nez (10) comporte ledit muret de guidage (15,16).

12. Ensemble selon une des revendications précédentes, **caractérisé en ce que** le bord d'accrochage profilée (30) présente à une extrémité libre une butée latérale (18) pour venir en contact avec un bord externe (24) de la courroie (20) en cours de montage de manière à empêcher son glissement.

13. Ensemble selon une des revendications précédentes, **caractérisé en ce que** l'outil comporte une face latérale (81) d'appui sur une joue latérale (6) de la poulie (1) et une région présentant une face inférieure (80, 85) d'appui sur la gorge (15) de la poulie (1) ainsi qu'une face supérieure (82) d'appui de la courroie (20) qui est disposée au moins au niveau du bord d'accrochage (11).

14. Ensemble selon la revendication 13, **caractérisé en ce que** ladite face inférieure d'appui présente un profil (80) complémentaire de la gorge rainurée (5) de ladite poulie (1).

15. Ensemble selon une des revendications 1 à 5, **caractérisé en ce que** l'outil est intégré à la poulie (1) qui présente un région latérale déportée (72) de plus petite surface que ledit bord (6) de la gorge rainurée (5) de la poulie (1) et qui s'inscrit dans son contour et **en ce que** cette région latérale déportée (72) présente un bord externe relevé (76), ce qui permet de recevoir un bord tombant de la courroie en aval de la région de nez (10).

16. Ensemble selon une des revendications 1 à 5, **caractérisé en ce que** l'outil est intégré à ladite poulie (1) et **en ce que** la poulie (1) présente une région latérale déportée (72), notamment cylindrique, dont la surface est inférieure à celle dudit bord latéral de la poulie et qui s'inscrit dans son contour, et **en ce qu'**il comporte un premier élément (120) formant un muret de guidage longeant une partie dudit bord (6) de la gorge rainurée (5) de la poulie (1) et un deuxième élément (110) formant un dit bord d'accrochage (111) et une dite région de dégagement profilée (116), au moins le deuxième élément (110) étant porté par ladite région latérale déportée (72) et étant bordé par une zone (101) de guidage latéral.

17. Ensemble selon la revendication 16, **caractérisé en ce que** la région de dégagement profilée (115, 116) présente une première région amont (115) qui est située radialement sensiblement au niveau de la gorge rainurée (5) de la poulie (1) et une deuxième région intermédiaire (116) raccordant la région amont à la région latérale déportée (72).

18. Ensemble selon l'une des revendications précédentes, **caractérisé en ce que** l'angle (α) est inférieur ou égal à 60° et plus particulièrement compris entre 30° et 45°.

## Patentansprüche

1. Einheit, die eine mit einer gerillten Nut (5) versehene Riemenscheibe (1) eines Übertragungssystems und ein Werkzeug zur Montage eines Riemens (20) auf diese Nut (5) aufweist, wobei das Werkzeug einen Nasenbereich (10) mit einer Außenseite (10₁), einen Innenrand (15) und einen Endbereich aufweist, der einen Befestigungsrand (11; 111) bildet, welcher bei der Montage eine Auflage für mindestens einen Teil der Zahnung (25) des Riemens (20) formt, derart, dass die Auflage durch Anheben eines Außenrands (23) des Riemens (20) bezüglich seines gegenüberliegenden Innenrands (24) erfolgt, wobei der Befestigungsrand (11, 111) außerdem radial angeordnet ist, oder mit einem durch die Basis (A) des Befestigungsrands (11, 111) verlaufenden Radius (12) der Riemenscheibe (1) einen in einer Ebene lotrecht zur Achse (4) der Riemenscheibe (1) liegenden Winkel (α) bildet, der kleiner als 80° ist, **dadurch gekennzeichnet, dass** der Befestigungsrand (11, 111) des Nasenbereichs (10) sich an seiner Basis durch einen profilierten Aussparungsbereich (30, 116) verlängert, der vom Rand (6) der gerillten Nut (5) der Riemenscheibe (1) ausgehend absinkt.

2. Einheit nach Anspruch 1, **dadurch gekennzeichnet, dass** die Außenseite (10₁) des Nasenbereichs (10) direkt über der Außenseite (6₁) des Rands (6) der gerillten Nut (5) der Riemenscheibe (1) liegt.

3. Einheit nach einem der Ansprüche 1 oder 2, **dadurch gekennzeichnet, dass** der Befestigungsrand (11, 111) des Nasenbereichs (10) einen flachen Scheitel (11₁) aufweist.

4. Einheit nach Anspruch 3, **dadurch gekennzeichnet, dass** der Scheitelbereich (11₁) des Befestigungsrands (11, 111) zu beiden Seiten konvexe Ränder (11₂, 11₃) aufweist.

5. Einheit nach einem der Ansprüche 1 oder 2, **dadurch gekennzeichnet, dass** der Befestigungsrand (11) konvex ist.

6. Einheit nach Anspruch 1, **dadurch gekennzeichnet, dass** der Befestigungsrand (11, 111) des Nasenbereichs (10) und der profilierte Aussparungsbereich (30) eine Nutzlänge (H') mindestens gleich der Breite der gerillten Nut (5) der Riemenscheibe (1) haben.

7. Einheit nach einem der vorhergehenden Ansprüche, **dadurch gekennzeichnet, dass** der profilierte Aussparungsbereich (30) einen im Wesentlichen ebenen oder konvexen Bereich aufweist, der in einer den Radius und die Achse der Riemenscheibe (1) enthaltenden ersten Ebene mit einem Radius der Riemenscheibe (1) einen Winkel (β₁) bildet, der insbesondere zwischen 30° und 60° liegt.

8. Einheit nach einem der vorhergehenden Ansprüche, **dadurch gekennzeichnet, dass** der profilierte Aussparungsbereich (30) mindestens einen vorderen (31) und/oder hinteren konvexen Rand (32) aufweist.

9. Einheit nach einem der vorhergehenden Ansprüche, **dadurch gekennzeichnet, dass** der Nasenbereich (10) und der profilierte Aussparungsbereich (30) einen im Wesentlichen ebenen, konkaven oder konvexen Anschlussbereich (35) aufweisen.

10. Einheit nach einem der vorhergehenden Ansprüche, **dadurch gekennzeichnet, dass** sie vor dem Befestigungsrand (11) einen geraden oder geneigten und entlang eines Teils des Rands (6) der gerillten Nut (5) der Riemenscheibe (1) verlaufenden hochstehenden Führungsrand (15, 16, 120) aufweist.

11. Einheit nach Anspruch 10, **dadurch gekennzeichnet, dass** der Nasenbereich (10) den hochstehenden Führungsrand (15, 16) aufweist.

12. Einheit nach einem der vorhergehenden Ansprüche, **dadurch gekennzeichnet, dass** der profilierte Aussparungsbereich (30) an einem freien Ende einen seitlichen Anschlag (18) aufweist, um während der Montage mit einem Außenrand (24) des Riemens (20) in Kontakt zu kommen, um sein Gleiten zu verhindern.

13. Einheit nach einem der vorhergehenden Ansprüche, **dadurch gekennzeichnet, dass** das Werkzeug eine Seitenfläche (81) zur Auflage auf einer Seitenwange (6) der Riemenscheibe (1) und einen Bereich aufweist, der eine Unterseite (80, 85) zur Auflage auf der Nut (15) der Riemenscheibe (1) sowie eine Oberseite (82) zur Auflage des Riemens (20) aufweist, die mindestens auf der Ebene des Befestigungsrands (11) angeordnet ist.

14. Einheit nach Anspruch 13, **dadurch gekennzeichnet, dass** die Auflageunterseite ein zur gerillten Nut (5) der Riemenscheibe (1) komplementäres Profil (80) aufweist.

15. Einheit nach einem der Ansprüche 1 bis 5, **dadurch gekennzeichnet, dass** das Werkzeug in die Riemenscheibe (1) integriert ist, die einen versetzten Seitenbereich (72) aufweist, der eine kleinere Fläche als der Rand (6) der gerillten Nut (5) der Riemenscheibe (1) hat und innerhalb ihres Umfangs liegt, und dass dieser versetzte Seitenbereich (72) einen angehobenen Außenrand (76) aufweist, der es ermöglicht, einen abfallenden Rand des Riemens hinter dem Nasenbereich (10) aufzunehmen.

16. Einheit nach einem der Ansprüche 1 bis 5, **dadurch gekennzeichnet, dass** das Werkzeug in die Riemenscheibe (1) integriert ist, und dass die Riemenscheibe (1) einen versetzten, insbesondere zylindrischen, Seitenbereich (72) aufweist, dessen Fläche kleiner als diejenige des Seitenrands der Riemenscheibe ist und der innerhalb ihres Umfangs liegt, und dass sie ein erstes Element (120), das einen hochstehenden Führungsrand formt, der entlang eines Teils des Rands (6) der gerillten Nut (5) der Riemenscheibe (1) verläuft, und ein zweites Element (110) aufweist, das einen Befestigungsrand (111) und einen profilierten Aussparungsbereich (116) formt, wobei mindestens das zweite Element (110) vom versetzten Seitenbereich (72) getragen wird und von einer seitlichen Führungszone (101) umrandet wird.

17. Einheit nach Anspruch 16, **dadurch gekennzeichnet, dass** der profilierte Aussparungsbereich (115, 116) einen ersten vorderen Bereich (115), der sich radial im Wesentlichen in der Ebene der gerillten Nut (5) der Riemenscheibe (1) befindet, und einen zweiten Zwischenbereich (116) aufweist, der den vorderen Bereich und den versetzten Seitenbereich (72) verbindet.

18. Einheit nach einem der vorhergehenden Ansprüche, **dadurch gekennzeichnet, dass** der Winkel (α) kleiner als oder gleich 60° ist und insbesondere zwischen 30° und 45° liegt.

## Claims

1. A Combination comprising a pulley (1,) with a ribbed groove (5), of a transmission system and a tool for mounting a belt (20) in this groove (5), the tool having a nose region (10) presenting an outside face (10₁), a plane flank (15) and an end region forming a catching edge (11, 111) that acts during mounting to form a bearing surface for at least a fraction of the ribs (25) of the belt (20) by raising an outside flank (23) of the belt (20) relative to its opposite inside flank (24), said catching edge (11, 111) being further disposed radially or forming an angle a relative to a radius (12) of the pulley (1) passing through a base (A) of the catching edge (11, 111), which angle α is measured in a plane perpendicular to the axis (4) of the pulley (1) and is less than 80°,**characterized in that** the catching edge (11, 111) of the nose region (10) is extended at its base by a profiled disengagement region (30, 116) dropping from the edge (6) of the ribbed groove (5) of the pulley (1).

2. A combination according to claim 1, **characterized in that** the outside face (10₁) of the nose region (10) is aligned with the outside face (6₁) of the edge (6) the ribbed groove (5) of the pulley (1).

3. A combination according to claim 1 or claim 2, **characterized in that** the catching edge (11) of the nose region (10) presents a peak (11₁) that is flat.

4. A combination according to claim 3, **characterized in that** the peak region (11₁) of the catching edge (11, 111) presents convex edges (11₂, 11₃) on either side.

5. A combination according to claim 1 or claim 2, **characterized in that** the catching edge (11, 111) is convex.

6. A combination according to claim 1, **characterized in that** the catching edge (11, 111) of the nose region (10) and the profiled disengagement region (30) have a working length H' not less than the width of the ribbed groove (5) of the pulley (1).

7. A combination according to one of the preceding claims, **characterized in that** the profiled disengagement region (30) presents a substantially plane or convex region forming an angle (β₁) with a radius of the pulley (1) in a first plane containing said radius and the axis of the pulley (1), which angle β₁ lies in particular in the range 30° to 60°.

8. A combination according to one of the preceding claims, **characterized in that** the profiled disengagement region (30) presents at least an upstream edge (31) and/or a downstream edge (32) that is convex.

9. A combination according to one of the preceding claims, **characterized in that** the nose region (10) and the profiled disengagement region (30) present a connection region that is substantially plane, concave, or convex (35).

10. A combination according to any preceding claim, **characterized in that**, upstream from the catching edge (11), it presents a straight or inclined low guide wall (15, 16, 120) running along a portion of said edge (6) of the ribbed groove (5) of the pulley (1).

11. A combination according to claim 10, **characterized in that** the nose region (10) includes said low guide wall (15, 16).

12. A combination according to any preceding claim, **characterized in that** the profiled disengagement region (30) presents a lateral abutment (18) at a free end for coming into contact with an outside flank (24) of the belt (20) during mounting so as to prevent it from slipping.

13. A combination according to any preceding claim, **characterized in that** the tool has a lateral face (81) for bearing against a lateral cheek (6) of the pulley (1) and a region presenting a bottom face (80, 85) for bearing against the groove (5) of the pulley (1) and a top face (82) against which the belt (20) bears and that is placed at least at the catching edge (11).

14. A combination according to claim 13, **characterized in that** said bearing bottom face presents a profile (80) that is complementary to the ribbed groove (5) of said pulley (1).

15. A combination according to any one of claims 1 to 5, **characterized in that** the tool is incorporated in the pulley (1) that presents an offset lateral region (72) of smaller area than the edge (6) of the ribbed groove (5) of the pulley (1) and that is inscribed within the outline thereof, and **in that** said offset lateral region (72) presents a raised outer edge (76) that enables a dropped strand of the belt to be received downstream from the nose region (10).

16. A combination according to any one of claims 1 to 5, **characterized in that** the tool is incorporated in said pulley (1), and **in that** the pulley (1) presents an offset lateral region (72), in particular a cylindrical region, of area that is smaller than the area of said lateral edge of the pulley and that is inscribed within its outline, and that it includes a first element (120) forming a low guide wall running along a fraction of said edge (6) of the ribbed groove (5) of the pulley (1) and a second element (110) forming a said catching edge (111) and a said profiled disengagement region (116), at least the second element (110) being carried by said offset lateral region (72) and having a lateral guide zone (101) running beside it.

17. A combination according to claim 16, **characterized in that** the profiled disengagement region (115, 116) presents an upstream first region (115) that is radially substantially level with the ribbed groove (5) of the pulley (1), and an intermediate second region (116) connecting the upstream region to the offset lateral region (72).

18. A combination according to any preceding claim, **characterized in that** the angle (α) is less than or equal to 60°, and more particularly lies in the range 30° to 45°.
